# EUROPÄISCHE PATENTSCHRIFT

(11) **EP 4 382 730 B1**
(45) Veröffentlichungstag und Bekanntmachung des Hinweises auf die Patenterteilung: **02.04.2025**
(21) Anmeldenummer: 23211394.4
(22) Anmeldetag: 22.11.2023
(51) Int. Cl.: F01N 3/025, F01N 3/10, F01N 3/20, F01N 3/28, F01N 13/00

(54) **ABGASBEHANDLUNGSANORDNUNG**
EXHAUST GAS TREATMENT ASSEMBLY
AGENCEMENT DE TRAITEMENT DE GAZ D'ÉCHAPPEMENT

(30) Priorität: 05.12.2022 DE 102022132123
(43) Veröffentlichungstag der Anmeldung: 12.06.2024
(73) Patentinhaber: Purem GmbH, 66539 Neunkirchen (DE)
(72) Erfinder: Bräuning, Silas, Denkendorf (DE); Datz, Wolfgang, Tübingen (DE); Henzler, Markus, Grafenberg (DE); Velyaev, Oleksandr, Stuttgart (DE); Wolf, Tobias, Köngen (DE); Wieland, Arthur, Baltmannsweiler (DE)
(74) Vertreter: Ruttensperger Lachnit Trossin Gomoll

(56) Entgegenhaltungen:
- DE-A1- 102009 041 345
- US-A1- 2006 260 297
- US-A1- 2009 031 711
- US-A1- 2010 251 700
- US-B2- 11 268 420
- US-B2- 8 756 927

## Beschreibung

Die vorliegende Erfindung betrifft eine Abgasbehandlungsanordnung für eine Abgasanlage einer Brennkraftmaschine, insbesondere einer Diesel-Brennkraftmaschine, gemäß dem Oberbegriff des Anspruchs 1.

Zum Erreichen der zulässigen Abgaswerte der von Brennkraftmaschinen, insbesondere Diesel-Brennkraftmaschinen, ausgestoßenen Abgase ist es beispielsweise bekannt, ein Reaktionsmittel, wie zum Beispiel eine Harnstoff/Wasser-Lösung, in das Abgas einzuspritzen, um in einer insbesondere als SCR-Katalysatoreinheit ausgebildeten Abgasbehandlungseinheit den Stickoxidanteil zu senken. Auch ist es bekannt, verschiedene Arten von Katalysatoren, wie zum Beispiel SCR-Katalysatoreinheiten und Oxidationskatalysatoreinheiten, in einer derartigen Abgasbehandlungsanordnung zu kombinieren, um eine möglichst effiziente Minderung des Schadstoffanteils in dem zur Umgebung ausgestoßenen Abgas zu erreichen.

Für die in verschiedenen Systembereichen einer derartigen Abgasbehandlungsanordnung durchzuführenden katalytischen Reaktionen ist es erforderlich, dass die hierfür wirksamen Katalysatormaterialien eine ausreichend hohe Temperatur aufweisen. Da insbesondere in Startphasen des Arbeitsbetriebs einer Brennkraftmaschine oder bei vergleichsweise niedrigen Umgebungstemperaturen die im Abgas transportierte Wärme oftmals nicht ausreichend ist, um eine für die durchzuführenden katalytischen Reaktionen ausreichend hohe Temperatur schnell zu erreichen bzw. zuverlässig aufrecht zu erhalten, ist es beispielsweise bekannt, elektrisch betriebene Abgasheizer in eine Abgasanlage zu integrieren, um auf das von einer Brennkraftmaschine ausgestoßene Abgas oder ein anderes in die Abgasanlage eingeleitetes Gas stromaufwärts eines oder mehrerer katalytisch wirksamer Systembereiche Wärme zu übertragen, die dann durch das Abgas bzw. Gas zu dem bzw. den katalytisch wirksamen Systembereichen transportiert und auf diese übertragen wird.

Eine Abgasbehandlungsanordnung gemäß dem Oberbegriff des Anspruchs 1 ist aus der US 2009/0031711 A1 bekannt. Bei dieser Abgasbehandlungsanordnung ist ein Abgas von einer Brennkraftmaschine aufnehmender Bypass-Strömungskanal so angeordnet, dass dieser einen Oxidationskatalysator umgeht und stromabwärts des Oxidationskatalysators und stromaufwärts eines Partikelfilters in einen den Oxidationskatalysator und den Partikelfilter umfassenden Strömungspfad einmündet. Stromabwärts des Partikelfilters ist ein Katalysator zur Verringerung des Stickoxidanteils vorgesehen. In eine zwischen dem Partikelfilter und dem Katalysator zur Verringerung des Stickoxidanteils verlaufende Mischstrecke wird vermittels einer Reduktionsmittel-Abgabeeinheit ein Reduktionsmittel eingeleitet. In den Bypass-Strömungskanal wird vermittels einer weiteren Reduktionsmittel-Reduktionsmittel-Abgabeeinheit ein weiteres Reduktionsmittel eingeleitet.

Die US 8,756,927 B2 offenbart eine Abgasbehandlungsanordnung, bei welcher in Abgasströmungsrichtung aufeinander folgend ein Stickoxid-Oxidationskatalysator, ein Partikelfilter und ein Stickoxid-Reduktionskatalysator angeordnet sind. In einem den Stickoxid-Oxidationskatalysator umgehenden Bypass-Strömungskanal wird Kraftstoff in einen den Bypass-Strömungskanal durchströmenden Anteil des von einer Brennkraftmaschine abgegebenen Abgases eingeleitet. Das den Bypass-Strömungskanal durchströmende Abgas und der in dieses eingeleitete Kraftstoff werden zwischen dem Stickoxid-Oxidationskatalysator und dem Stickoxid-Reduktionskatalysator in den diese beiden Katalysatoren enthaltenden Strömungspfad eingeleitet.

Die US 2010/0251700 A1 offenbart eine Abgasbehandlungsanordnung, bei welcher ein einen Teil des von einer Brennkraftmaschine ausgestoßene Abgases aufnehmender Bypass-Strömungskanal einen einen Diesel-Oxidationskatalysator und einen Diesel-Partikelfilter enthaltenden Strömungspfad umgeht und stromaufwärts eines Katalysators zur selektiven katalytischen Reduktion von Kohlenwasserstoff in den Strömungsquerschnitt einmündet. In den Bypass-Strömungskanal wird Kohlenwasserstoff eingeleitet.

Die DE 10 2009 041 345 A1 offenbart eine Abgasbehandlungsanordnung, bei welcher in einen eine Drosselklappe umgehenden Bypass-Strömungskanal Kraftstoff oder eine Harnstofflösung eingespritzt wird. In dem Bypass-Strömungskanal angeordnete Prallbleche unterstützen die Durchmischung von Abgas und Kraftstoff bzw. Harnstofflösung.

Die US 2006/0260297 A1 offenbart eine Abgasbehandlungsbaugruppe, bei welcher stromaufwärts einer zwei Abschnitte umfassenden Stickstofffalle ein Reformat in einen Abgasstrom eingeleitet wird.

Die US 11,268,420 B2 offenbart eine Abgasbehandlungsbaugruppe, bei welcher in einem stromaufwärtigen Bereich stromaufwärts eines Oxidationskatalysators und eines SCR-Katalysators Kraftstoff und eine Harnstofflösung in den Abgasstrom eingespritzt werden.

Es ist die Aufgabe der vorliegenden Erfindung, eine Abgasbehandlungsanordnung für eine Abgasanlage einer Brennkraftmaschine, insbesondere Diesel-Brennkraftmaschine, vorzusehen, mit welcher bei baulich einfacher und kompakter Ausgestaltung eine zuverlässige Erwärmung von zur Abgasbehandlung vorgesehenen Systembereichen gewährleistet werden kann.

Erfindungsgemäß wird diese Aufgabe gelöst durch eine Abgasbehandlungsanordnung für eine Abgasanlage einer Brennkraftmaschine, insbesondere Diesel-Brennkraftmaschine, gemäß Anspruch 1. Diese Abgasbehandlungsanordnung umfasst wenigstens eine erste Abgasbehandlungseinheit und stromabwärts der wenigstens einen ersten Abgasbehandlungseinheit, eine Abgasbehandlungsbaugruppe, wobei die wenigstens eine erste Abgasbehandlungseinheit und die Abgasbehandlungsbaugruppe in Richtung einer Strömungspfad-Längsachse eines die wenigstens eine erste Abgasbehandlungseinheit und die Abgasbehandlungsbaugruppe umfassenden Strömungspfads axial aufeinander folgend angeordnet sind, wobei eine Kohlenwasserstoff-Einleitbaugruppe zum Einleiten von Kohlenwasserstoff in die Abgasbehandlungsanordnung durchströmendes Abgas vorgesehen ist, wobei die Kohlenwasserstoff-Einleitbaugruppe wenigstens einen Bypass-Strömungskanal umfasst, wobei der wenigstens eine Bypass-Strömungskanal einen Strömungskanal-Eintrittsbereich zur Aufnahme von Abgas stromaufwärts der wenigstens einen ersten Abgasbehandlungseinheit und einen Strömungskanal-Austrittsbereich zum Abgeben von Abgas oder/und Kohlenwasserstoff in den Strömungspfad stromabwärts der wenigstens einen ersten Abgasbehandlungseinheit und stromaufwärts der Abgasbehandlungsbaugruppe umfasst, und wobei die Kohlenwasserstoff-Einleitbaugruppe eine Kohlenwasserstoff-Abgabeeinheit zum Abgeben von Kohlenwasserstoff in den wenigstens einen Bypass-Strömungskanal umfasst.

Durch das Bereitstellen der erfindungsgemäß aufgebauten Kohlenwasserstoff-Einleitbaugruppe wird die Möglichkeit geschaffen, bei seiner Oxidation Wärme freisetzenden und somit zur Erwärmung von zur Abgasbehandlung vorgesehenen Systembereichen beitragenden Kohlenwasserstoff, also beispielsweise den auch einer Brennkraftmaschine zuzuführenden Kraftstoff, in den Abgasstrom einzuleiten und effizient mit Abgas zu durchmischen. Da der wenigstens eine Bypass-Strömungskanal nur einen Teil des in die Abgasbehandlungsanordnung eingeleiteten Abgases aufnimmt, während der verbleibende Teil des in die Abgasbehandlungsanordnung eingeleiteten Abgases den Strömungspfad stromaufwärts der Einmündung des wenigstens einen Bypass-Strömungskanals durchströmt, wird der in den wenigstens einen Bypass-Strömungskanal eingeleitete Kohlenwasserstoff mit einer im Vergleich zu dem gesamten in die Abgasbehandlungsanordnung eingeleiteten Abgas vergleichsweise geringen Abgasmenge vermischt, was eine gleichmäßige Durchmischung von Abgas und Kohlenwasserstoff in dem wenigstens einen Bypass-Strömungskanal unterstützt.

Um einen Teil des die Abgasbehandlungsanordnung durchströmenden Abgases stromaufwärts der wenigstens einen ersten Abgasbehandlungseinheit abzweigen zu können, kann vorgesehen sein, dass ein stromaufwärtiger Endbereich des Strömungspfads an ein Einleitgehäuse anschließt, und dass der Strömungskanal-Eintrittsbereich des wenigstens einen Bypass-Strömungskanals an das Einleitgehäuse anschließt zur Aufnahme von Abgas aus dem Einleitgehäuse oder/und an einen zwischen dem Einleitgehäuse und der wenigstens einen ersten Abgasbehandlungseinheit liegenden Abschnitt des Strömungspfads anschließt zur Aufnahme von Abgas aus dem Strömungspfad.

Zur Unterstützung von Abgas und Kohlenwasserstoff in dem Bypass-Strömungskanal kann in dem wenigstens einen Bypass-Strömungskanal wenigstens eine Drallstrom-Erzeugungseinheit angeordnet ist.

Wenn wenigstens eine Drallstrom-Erzeugungseinheit stromaufwärts der Kohlenwasserstoff-Abgabeeinheit angeordnet ist, wird bereits vor dem Ort, an welchem der Kohlenwasserstoff in das den Bypass-Strömungskanal durchströmende Abgas eingeleitet wird, der Abgasstrom im Bypass Strömungskanal verwirbelt bzw. mit einem Drall versetzt und kann in diesem Zustand dann den in diesen eingeleiteten Kohlenwasserstoff mitführen. Wenn alternativ oder zusätzlich vorgesehen ist, dass wenigstens eine Drallstrom-Erzeugungseinheit stromabwärts der Kohlenwasserstoff-Abgabeeinheit angeordnet ist, wird das Gemisch aus Abgas und Kohlenwasserstoff stromabwärts des Ortes, an dem der Kohlenwasserstoff in das Abgas eingeleitet wird, effizient verwirbelt und vermischt.

Um die Menge des durch den wenigstens einen Bypass-Strömungskanal geleiteten Anteils des die Abgasbehandlungsanordnung durchströmenden Abgases regulieren zu können, kann dem wenigstens einen Bypass-Strömungskanal eine Abgasstrom-Reguliereinheit zugeordnet sein.

Beispielweise kann die Abgasstrom-Reguliereinheit eine Stellklappe umfassen, welche, je nach Klappenstellung, den wenigstens einen Bypass-Strömungskanal beispielsweise gegen Durchströmung im Wesentlichen vollständig absperren kann oder in maximalem Ausmaß zur Durchströmung freigegeben kann oder in einer zwischen diesen beiden Extremstellungen liegenden Klappenstellung den Abgasstrom in dem wenigstens einen Bypass-Strömungskanal drosseln kann.

Zum Erhalt einer kompakten Bauart wird vorgeschlagen, dass der wenigstens eine Bypass-Strömungskanal einen in Richtung einer zur Strömungspfad-Längsachse im Wesentlichen parallelen Strömungskanal-Längsachse verlaufenden Strömungskanalabschnitt umfasst, und dass die Kohlenwasserstoff-Abgabeeinheit zur Abgabe von Kohlenwasserstoff in den Strömungskanalabschnitt ausgebildet ist.

Zur weiteren Minderung des in dem von einer Brennkraftmaschine ausgestoßenen Abgas enthaltenen Schadstoffanteils ist stromabwärts der Abgasbehandlungsbaugruppe wenigstens eine zweite Abgasbehandlungseinheit angeordnet.

Um in der wenigstens einen zweiten Abgasbehandlungseinheit eine katalytische Reinigungsreaktion effizient durchführen zu können, ist stromabwärts der Abgasbehandlungsbaugruppe und stromaufwärts der wenigstens einen zweiten Abgasbehandlungseinheit eine Abgas/Reaktionsmittel-Mischstrecke mit einem im Wesentlichen in Richtung einer Mischstrecken-Längsachse langgestreckten Mischkanal und einer Reaktionsmittel-Abgabeeinheit zum Abgeben von Reaktionsmittel in den Mischkanal vorgesehen.

Für eine kompakte Ausgestaltung der Abgasbehandlungsanordnung ist die Mischstrecken-Längsachse im Wesentlichen parallel zur Strömungspfad-Längsachse, und der Strömungspfad und die Abgas/Reaktionsmittel-Mischstrecke überlappen einander in axialer Richtung im Wesentlichen vollständig, so dass ein Eintrittsbereich der Abgas/Reaktionsmittel-Mischstrecke in Richtung der Mischstrecken-Längsachse im Wesentlichen im gleichen axialen Bereich positioniert ist, wie ein Austrittsbereich der Abgasbehandlungsbaugruppe, und ein Austrittsbereich der Abgas/Reaktionsmittel-Mischstrecke in Richtung der Mischstrecken-Längsachse im Wesentlichen im gleichen axialen Bereich positioniert ist, wie ein Eintrittsbereich der wenigstens einen ersten Abgasbehandlungseinheit.

Eine effiziente Ausnutzung des für die Abgasbehandlungsanordnung bereitgestellten Bauvolumens kann erreicht werden, wenn eine Abgas-Hauptströmungsrichtung im Mischkanal im Wesentlichen entgegengesetzt gerichtet ist zu einer Abgas-Hauptströmungsrichtung im Strömungspfad.

Weiter kann hierfür die wenigstens eine zweite Abgasbehandlungseinheit in Richtung einer zur Strömungspfad-Längsachse im Wesentlichen parallelen Abgasbehandlungseinheit-Längsachse langgestreckt sein und im Wesentlichen in Richtung der Abgasbehandlungseinheit-Längsachse durchströmbar sein, und die wenigstens eine zweite Abgasbehandlungseinheit und die Abgas/Reaktionsmittel-Mischstrecke können einander in axialer Richtung im Wesentlichen vollständig überlappen, so dass der Eintrittsbereich der Abgas/Reaktionsmittel-Mischstrecke in Richtung der Mischstrecken-Längsachse im Wesentlichen im gleichen axialen Bereich positioniert ist, wie ein Austrittsbereich der wenigstens einen zweiten Abgasbehandlungseinheit, und der Austrittsbereich der Abgas/Reaktionsmittel-Mischstrecke in Richtung der Mischstrecken-Längsachse im Wesentlichen im gleichen axialen Bereich positioniert ist, wie ein Eintrittsbereich der wenigstens einen zweiten Abgasbehandlungseinheit.

Zum Bereitstellen einer Strömungsverbindung kann der Eintrittsbereich der Abgas/Reaktionsmittel-Mischstrecke über ein erstes Strömungsumlenkgehäuse mit dem Austrittsbereich der Abgasbehandlungsbaugruppe verbunden sein, und der Austrittsbereich der Abgas/Reaktionsmittel-Mischstrecke kann über ein zweites Strömungsumlenkgehäuse mit dem Eintrittsbereich der wenigstens einen zweiten Abgasbehandlungseinheit verbunden sein.

Für eine Erhöhung der Abgasbehandlungseffizienz bei kompakter Bauart können wenigstens zwei zueinander parallel durchströmbare zweite Abgasbehandlungseinheiten quer zur Abgasbehandlungseinheit-Längsachse nebeneinander und einander in Richtung der Abgasbehandlungseinheit-Längsachse im Wesentlichen vollständig überlappend vorgesehen sein.

Wenigstens eine Abgasbehandlungseinheit kann wenigstens eine SCR-Katalysatoreinheit oder/und wenigstens eine Ammoniaksperrkatalysatoreinheit umfassen. Weiter kann die Abgasbehandlungsbaugruppe eine Oxidationskatalysatoreinheit oder/und eine Partikelfiltereinheit umfassen.

Eine kompakte Bauart der erfindungsgemäß aufgebauten Abgasbehandlungsanordnung kann weiter dadurch unterstützt werden, der Strömungskanal-Eintrittsbereich im gleichen axialen Bereich positioniert ist, wie ein Eintrittsbereich der wenigstens einen ersten Abgasbehandlungseinheit, und der Strömungskanal-Austrittsbereich axial zwischen der wenigstens einen ersten Abgasbehandlungseinheit und der Abgasbehandlungsbaugruppe liegt.

Zur weitergehenden Unterstützung der Durchmischung von Abgas und Reaktionsmittel kann an einem Austrittsbereich der wenigstens einen ersten Abgasbehandlungseinheit eine Drallstrom-Erzeugungseinheit, vorzugsweise mit einer Mehrzahl von im Wesentlichen radial bezüglich der Strömungspfad-Längsachse sich erstreckenden Strömungsablenkelementen, angeordnet sein.

Um einen möglichst gleichmäßigen Eintritts von Abgas bzw. Kohlenwasserstoff über den Querschnitt der Abgasbehandlungsbaugruppe erreichen zu können, wird vorgeschlagen, dass an einem Eintrittsbereich der Abgasbehandlungsbaugruppe ein Strömungsverteilungselement mit einer Vielzahl von, vorzugsweise im Wesentlichen gleich dimensionierten oder/und am Strömungsverteilungselement im Wesentlichen gleichmäßig verteilten, Strömungsdurchtrittsöffnungen angeordnet ist.

Die Erfindung betrifft ferner eine Abgasanlage für eine Brennkraftmaschine, insbesondere Diesel-Brennkraftmaschine, umfassend wenigstens eine erfindungsgemäß aufgebaute Abgasbehandlungsanordnung.

Die vorliegende Erfindung wird nachfolgend mit Bezug auf die beiliegenden Figuren detailliert beschrieben. Es zeigt:
- Fig. 1: eine teilweise offen dargestellte Seitenansicht einer Abgasbehandlungseinheit für eine Brennkraftmaschine;
- Fig. 2: in prinzipartiger und abgewickelter Darstellung die in Strömungsrichtung aufeinander folgenden und einander im Wesentlichen axial überlappenden Systembereiche der Abgasbehandlungsanordnung der Fig. 1;
- Fig. 3: eine Prinzip-Querschnittansicht der Abgasbehandlungsanordnung der Fig. 1, geschnitten längs einer Linie III-III in Fig. 1;
- Fig. 4: eine perspektivische Querschnittansicht der Abgasbehandlungsanordnung der Fig. 1, geschnitten längs einer Linie IV-IV in Fig. 1.

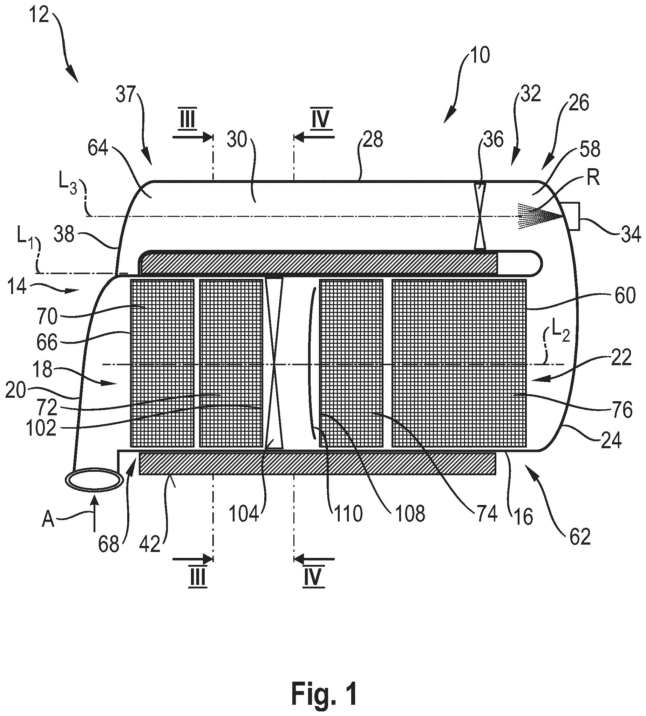

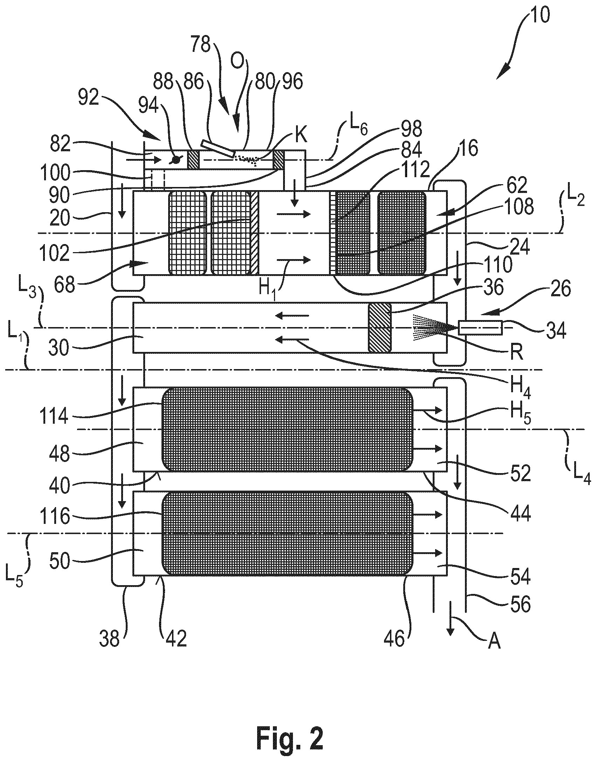

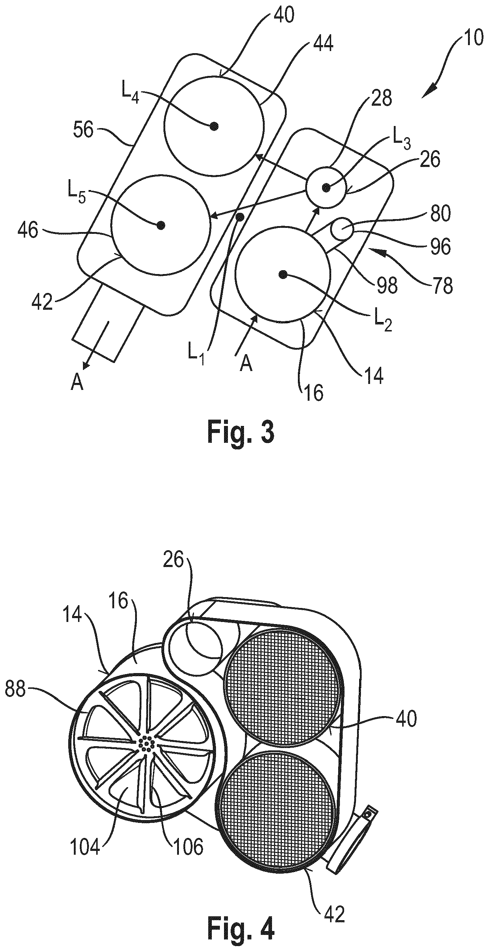

**In** Fig. 1 ist eine Abgasbehandlungsanordnung 10 für eine Abgasanlage 12 insbesondere für eine Diesel-Brennkraftmaschine in Seitenansicht zu erkennen. Eine derartige Abgasbehandlungsanordnung 10 kann beispielsweise in einer Abgasanlage 12 eines Nutzkraftfahrzeugs bzw. eines Lastkraftwagens vorgesehen sein. In den Fig. 2 und 3 ist die Abgasbehandlungsanordnung 10 in prinzipieller Ansicht dargestellt, wobei die Fig. 2 eine Umfangsabwicklung der grundsätzlich in Richtung einer Abgasbehandlungsanordnung-Längsachse L₁ langgestreckten Abgasbehandlungsanordnung 10 dargestellt ist.

Die Abgasbehandlungsanordnung 10 umfasst einen allgemein mit 14 bezeichneten und in Richtung einer Strömungspfad-Längsachse L₂ langgestreckten Strömungspfad mit einem einstückigen oder aus mehreren Teilen zusammengesetzten, im Wesentlichen rohrartigen Strömungspfadgehäuse 16. An einem stromaufwärtigen Endbereich 18 des Strömungspfads 14 schließt ein Einleitgehäuse 20 an das Strömungspfadgehäuse 16 an. Über das Einleitgehäuse 20 wird von einer Brennkraftmaschine ausgestoßenes Abgas A in die Abgasbehandlungsanordnung 10 bzw. den Strömungspfad 14 eingeleitet. In einem stromabwärtigen Endbereich 22 des Strömungspfads 14 schließt ein erstes Umlenkgehäuse 24 an das Strömungspfadgehäuse 16 an. Im ersten Umlenkgehäuse 24 wird das den Strömungspfad 14 durchströmende bzw. aus diesem austretende Abgas A um etwa 180° umgelenkt und in eine Abgas/Reaktionsmittel-Mischstrecke 26 eingeleitet. Die Abgas/Reaktionsmittel-Mischstrecke 26 umfasst in einem rohrartigen Mischstreckengehäuse 28 einen in Richtung einer Mischstrecken-Längsachse L₃ langgestreckten Mischkanal 30. An einem stromaufwärtigen Endbereich 32 der Abgas/Reaktionsmittel-Mischstrecke 26 ist, beispielsweise getragen am ersten Umlenkgehäuse 24, eine allgemein auch als Injektor bezeichnete Reaktionsmittel-Abgabeeinheit 34 vorgesehen, durch welche ein Reaktionsmittel R, beispielsweise eine Harnstoff/Wasser-Lösung, in den Mischkanal 30 eingespritzt wird. Zum Unterstützen der Durchmischung von Abgas A und Reaktionsmittel R kann in dem Mischstreckengehäuse 28 ein beispielsweise eine Mehrzahl von Ablenkschaufeln oder dergleichen umfassender Mischer 36 angeordnet sein.

In einem stromabwärtigen Endbereich 37 der Abgas/Reaktionsmittel-Mischstrecke 26 schließt das Mischstreckengehäuse 28 an ein zweites Umlenkgehäuse 38 an. Im zweiten Umlenkgehäuse 38 findet erneut eine Umlenkung des Abgasstroms um etwa 180° statt. Über das zweite Umlenkgehäuse 38 wird das Abgas im dargestellten Ausgestaltungsbeispiel in zwei zueinander parallel durchströmbare zweite Abgasbehandlungseinheiten 40, 42 eingeleitet. Jede der zweiten Abgasbehandlungseinheiten 40, 42 umfasst ein rohrartiges und in Richtung einer jeweiligen Abgasbehandlungseinheit-Längsachse L₄, L₅ langgestrecktes Abgasbehandlungseinheitgehäuse 44, 46. Ein jeweiliger stromaufwärtiger Endbereich der Abgasbehandlungseinheitgehäuse 44, 46 stellt einen jeweiligen Eintrittsbereich 48, 50 der zweiten Abgasbehandlungseinheiten 40, 42 bereit, und ein jeweiliger stromabwärtiger Endbereich der Abgasbehandlungseinheitgehäuse 44, 46 stellt einen jeweiligen Austrittsbereich 52, 54 der zweiten Abgasbehandlungseinheiten 40, 42 bereit. Diese sind zu einem Ableitgehäuse 56 offen, über welches das in der Abgasbehandlungsanordnung 10 behandelte Abgas A die Abgasbehandlungsanordnung 10 zu weiteren Systembereichen der Abgasanlage 12, beispielsweise einem oder mehreren Schalldämpfer oder dergleichen, verlässt.

Die Fig. 1 und 3 zeigen, dass in der Abgasbehandlungsanordnung 10 der Strömungspfad 14, die Abgas/Reaktionsmittel-Mischstrecke 26 und die zweiten Abgasbehandlungseinheiten 40, 42 derart positioniert sind, dass deren Längsachsen L₂, L₃, L₄, L₅ zueinander und zur Abgasbehandlungsanordnung-Längsachse L₁ im Wesentlichen parallel sind und dass sie sich in axialer Richtung im Wesentlichen vollständig überlappen. Dies bedeutet, dass ein Eintrittsbereich 58 der Abgas/Reaktionsmittel-Mischstrecke 26 im Wesentlichen im gleichen axialen Bereich liegt, wie ein Austrittsbereich 60 einer im Strömungspfad 14 angeordneten Abgasbehandlungsbaugruppe 62, und dass ein Austrittsbereich 64 der Abgas/Reaktionsmittel-Mischstrecke 26 im Wesentlichen im gleichen axialen Bereich liegt wie ein Eintrittsbereich 66 einer im Strömungspfad 14 angeordneten ersten Abgasbehandlungseinheit 68. Gleichermaßen liegt der Austrittsbereich 64 der Abgas/Reaktionsmittel-Mischstrecke 26 im Wesentlichen im gleichen axialen Bereich, wie die Eintrittsbereiche 48, 50 der zweiten Abgasbehandlungseinheiten 40, 42, während der Eintrittsbereich 58 der Abgas/Reaktionsmittel-Mischstrecke 26 im Wesentlichen im gleichen axialen Bereich liegt, wie die Austrittsbereiche 52, 54 der zweiten Abgasbehandlungseinheiten 40, 42.

Die im Strömungspfad 14 bzw. im Strömungspfadgehäuse 16 angeordnete erste Abgasbehandlungseinheit 68 umfasst im dargestellten Ausgestaltungsbeispiel zwei in Strömungsrichtung bzw. axial in Richtung der Strömungspfad-Längsachse L₂ aufeinander folgend eine SCR-Katalysatoreinheit 70 und eine oder/und wenigstens eine Ammoniaksperrkatalysatoreinheit 72. Das über das Einleitgehäuse 20 in den Strömungspfad 14 eingeleitete Abgas A durchströmt die beiden Katalysatoreinheiten 70, 72 der ersten Abgasbehandlungseinheit 68 im Wesentlichen in einer Abgas-Hauptströmungsrichtung H₁ im Strömungspfad 14, wobei die Abgas-Hauptströmungsrichtung H₁ im Strömungspfad 14 im Wesentlichen parallel zur Strömungspfad-Längsachse L₂ orientiert ist. Selbstverständlich können von dieser Abgas-Hauptströmungsrichtung H₁ abweichende Strömungsrichtungskomponenten vorhanden sein, beispielsweise in Bereichen, in welchen Verwirbelungen oder Turbulenzen auftreten. In der Abgasanlage 12 kann stromaufwärts der Abgasbehandlungsanordnung 10 bzw. der SCR-Katalysatoreinheit 70 eine weitere Reaktionsmittel-Abgabeeinheit angeordnet sein, um stromaufwärts der SCR-Katalysatoreinheit 70 ein Reaktionsmittel, beispielsweise eine Harnstoff/WasserLösung, in den Abgasstrom einzuleiten.

Stromabwärts der beiden Katalysatoreinheiten 70, 72 der ersten Abgasbehandlungseinheit 68 sind in Strömungsrichtung aufeinander folgend eine Oxidationskatalysatoreinheit 74, insbesondere Diesel-Oxidationskatalysatoreinheit, und eine Partikelfiltereinheit 76 der Abgasbehandlungsbaugruppe 62 angeordnet. Das den Strömungspfad 14 durchströmende Abgas A strömt im Wesentlichen in der Abgas-Hauptströmungsrichtung H₁ zunächst durch die Oxidationskatalysatoreinheit 74 und dann die Partikelfiltereinheit 76, bevor es durch das erste Umlenkgehäuse 24 in Richtung zur Abgas/Reaktionsmittel-Mischstrecke 26 umgelenkt wird.

Es ist darauf hinzuweisen, dass bei der Abgasbehandlungsanordnung 10 sowohl die erste Abgasbehandlungseinheit 68, als auch die Abgasbehandlungsbaugruppe 62 anders aufgebaut sein können, als im dargestellten Ausgestaltungsbeispiel. So könnte beispielsweise die erste Abgasbehandlungseinheit 68 nur die SCR-Katalysatoreinheit 70 umfassen. Die Abgasbehandlungsbaugruppe 62 könnte beispielsweise nur die Oxidationskatalysatoreinheit 76 umfassen.

Die Abgasbehandlungsanordnung 10 umfasst eine allgemein mit 78 bezeichnete Kohlenwasserstoff-Einleitbaugruppe zum Einleiten von Kohlenwasserstoff K in das die Abgasbehandlungsanordnung 10 durchströmende Abgas A.

Die Kohlenwasserstoff-Einleitbaugruppe 78 umfasst einen Bypass-Strömungskanal 80, welcher im dargestellten Ausgestaltungsbeispiel mit einem Strömungskanal-Eintrittsbereich 82 an das Einleitgehäuse 20 anschließt und somit einen Teil des in das Einleitgehäuse 20 bzw. die Abgasbehandlungsanordnung 10 eingeleiteten Abgase A stromaufwärts des Strömungspfads 14 bzw. der im Strömungspfad 14 angeordneten ersten Abgasbehandlungseinheit 68 aufnimmt. Ein Strömungskanal-Austrittsbereich 84 des Bypass-Strömungskanals 80 ist in einem Bereich axial zwischen der ersten Abgasbehandlungseinheit 68 und der Abgasbehandlungsbaugruppe 62 zum Strömungspfad 14 offen. Das im Bypass-Strömungskanal 80 erzeugte Gemisch aus Abgas A und Kohlenwasserstoff K tritt somit in den Strömungspfad 14 in einem Bereich stromabwärts der ersten Abgasbehandlungseinheit 68 und stromaufwärts der Abgasbehandlungsbaugruppe 62 ein.

Die Kohlenwasserstoff-Einleitbaugruppe 78 umfasst in Zuordnung zu dem Bypass-Strömungskanal 80 eine allgemein auch als Injektor bezeichnete bzw. wirksame Kohlenwasserstoff-Abgabeeinheit 86. Diese injiziert den Kohlenwasserstoff K beispielsweise in Form eines Sprühnebels bzw. in Tröpfchenform in den den Bypass-Strömungskanal 80 durchströmenden Anteil des in die Abgasbehandlungsanordnung 10 eingeleiteten Abgases.

Um die Vermischung von Abgas A und Kohlenwasserstoff K im Bereich des Bypass-Strömungskanals 80 zu unterstützen, kann stromaufwärts des Ortes O, an welchem durch die Kohlenwasserstoff-Abgabeeinheit 86 der Kohlenwasserstoff K in den Bypass-Strömungskanal 80 eingeleitet wird, eine Drallstrom-Erzeugungseinheit 88 vorgesehen sein, durch welche der den Bypass-Strömungskanal 80 durchströmende Abgasstrom in Umfangsrichtung abgelenkt wird, so dass bereits stromaufwärts des Ortes O eine Drallströmung entsteht. Beispielsweise kann die Drallstrom-Erzeugungseinheit 68 einen Mischer mit einer Mehrzahl von schaufelartigen Strömungsablenkelementen umfassen. Alternativ oder zusätzlich kann auch stromabwärts des Ortes O, an welchem der Kohlenwasserstoff K in den Bypass-Strömungskanal 80 eingeleitet wird, eine Drallstrom-Erzeugungseinheit 90 bzw. ein Mischer angeordnet sein.

**In** Zuordnung zum Bypass-Strömungskanal 80 ist ferner eine Abgasstrom-Reguliereinheit 92 vorgesehen. Diese kann beispielsweise eine nahe dem Strömungskanal-Eintrittsbereich 82 und stromaufwärts der Drallstrom-Erzeugungseinheit 88 positionierte Stellklappe 94 umfassen. Je nach Schwenkstellung der Stellklappe 94 kann diese beispielsweise in einer Schließstellung den Bypass-Strömungskanal 80 gegen Durchströmung im Wesentlichen vollständig absperren oder in einer Offenstellung den Bypass-Strömungskanal 80 zur Durchströmung in maximalem Ausmaß freigeben. Durch Einstellen der Stellklappe 94 in einer bzw. mehreren Zwischenstellungen zwischen der Schließstellung und der Offenstellung ist es möglich, den Anteil des in den Bypass-Strömungskanal 80 geleiteten Abgases zu regulieren. Dadurch wird es möglich, in Anpassung an die Menge des eingeleiteten Kohlenwasserstoffs K auch die Menge des Abgases zu verringern oder zu erhöhen, um auf diese Art und Weise einerseits die effiziente Durchmischung von Abgas A und Kohlenwasserstoff K zu unterstützen, und andererseits dafür zu sorgen, dass stromabwärts der ersten Abgasbehandlungseinheit 68 ein Gemisch aus Abgas A und Kohlenwasserstoff K mit definiert einstellbarem Mengenverhältnis in den Strömungspfad 14 und somit in den in den stromaufwärtigen Endbereich 18 des Strömungspfads 14 eintretenden Anteil des in die Abgasbehandlungsanordnung 10 eingeleiteten Abgases eingeleitet wird.

Der Bypass-Strömungskanal 80 umfasst einen in Richtung einer Strömungskanal-Längsachse L₆ langgestreckten Kanalabschnitt 96. Dieser bzw. die Strömungskanal-Längsachse L₆ verläuft im Wesentlichen parallel zur Strömungspfad-Längsachse L₂, so dass ein wesentlicher Erstreckungsabschnitt des Bypass-Strömungskanals 80 und der Strömungspfad 14 zueinander im Wesentlichen parallel und einander axial überlappend verlaufen und damit der Strömungskanal-Eintrittsbereich 82 näherungsweise im gleichen axialen Bereich liegt, wie der Eintrittsbereich 66 der ersten Abgasbehandlungseinheit 68. Wie die Fig. 3 dies veranschaulicht, ermöglicht dies die vollständige Unterbringung des Bypass-Strömungskanals 80 in der Außenumfangskontur der gesamten Abgasbehandlungsanordnung 10 und führt somit zu einer kompakten Bauart.

An den in Richtung der Abgasbehandlungsanordnung-Längsachse L₁ sich erstreckenden Strömungskanalabschnitt 96 schließt ein beispielsweise im Wesentlichen radial sich erstreckender Strömungskanalabschnitt 98 an, welcher in das Strömungspfadgehäuse 16 axial zwischen der ersten Abgasbehandlungseinheit 68 und der Abgasbehandlungsbaugruppe 62 einmündet. Damit wird der den Bypass-Strömungskanal 80 verlassende Strom aus Abgas A und Kohlenwasserstoff K näherungsweise im Wesentlichen radial oder bei entsprechender Anstellung des Strömungskanalabschnitts 98 in Umfangsrichtung näherungsweise tangential in den Strömungspfad 14 eingeleitet, was zur weiteren Vermischung mit dem die erste Abgasbehandlungseinheit 68 durchströmenden Teil des in die Abgasbehandlungsanordnung 10 eingeleiteten Abgases A beiträgt.

In Fig. 2 ist mit Strichlinie angedeutet, dass der Bypass-Strömungskanal 80 in seinem Strömungskanal-Eintrittsbereich 82 direkt an den Strömungspfad 14 bzw. das Strömungspfadgehäuse 16 in einem Bereich stromaufwärts der ersten Abgasbehandlungseinheit 68 mit einem im Wesentlichen radial sich erstreckenden Strömungskanalabschnitt 100 anschließen könnte und somit Abgas direkt aus dem Strömungspfad 14 stromabwärts des Einleitgehäuses 20 aufnehmen könnte. Weiter ist darauf hinzuweisen, dass in Zuordnung zu dem Strömungspfad 14 auch mehrere beispielsweise in Umfangsrichtung um die Strömungspfad-Längsachse L₂ mit Abstand zueinander angeordnete Bypass-Strömungspfade 18 mit einer jeweils zugeordneten Kohlenwasserstoff-Abgabeeinheit 86 angeordnet sein könnten. Damit kann bei gleichwohl im Verhältnis zum Strömungsquerschnitt im Strömungspfad 14 mit kleinerem Strömungsquerschnitt dimensionierten Bypass-Strömungskanälen 80 und der dadurch erreichbaren effizienten Durchmischung von Abgas A und Kohlenwasserstoff K die Menge des mit Kohlenwasserstoff K zu durchmischenden Abgases A erhöht werden.

Um die Durchmischung des aus dem Bypass-Strömungskanal 80 in den Strömungspfad 14 eingeleiteten Gemisches aus Abgas und Kohlenwasserstoff mit dem durch die erste Abgasbehandlungseinheit 68 geleiteten Abgas zu unterstützen, ist an einem Austrittsbereich 102 der ersten Abgasbehandlungseinheit 68 eine Drallstrom-Erzeugungseinheit 104 vorgesehen. Diese umfasst beispielsweise eine Mehrzahl von im Wesentlichen radial bezüglich der Strömungspfad-Längsachse L₂ sich erstreckenden Strömungsablenkelementen 106, durch welche das die erste Abgasbehandlungseinheit 68 durchströmende Abgas in Umfangsrichtung abgelenkt wird.

An einem Eintrittsbereich 108 der Abgasbehandlungsbaugruppe 62 ist ein Strömungsverteilungselement 110 vorgesehen. Dieses im Wesentlichen plattenartig ausgebildete Strömungsverteilungselement 110 weist eine Vielzahl von im Wesentlichen gleich dimensionierten oder/und am Strömungsverteilungselement 110 im Wesentlichen gleichmäßig verteilten Strömungsdurchtrittsöffnungen 112 auf. Durch das Strömungsverteilungselement 110 wird das am Eintrittsbereich 108 in die Abgasbehandlungsbaugruppe 62, insbesondere die Oxidationskatalysatoreinheit 74, eintretende Gemisch aus Abgas und Kohlenwasserstoff über den Querschnitt der Abgasbehandlungsbaugruppe 62 gleichmäßig verteilt und kann in dieser gleichmäßig verteilten Art und Weise in die Abgasbehandlungsbaugruppe 62 eintreten.

Durch Oxidation des im Abgas A transportierten Kohlenwasserstoffs K in der Oxidationskatalysatoreinheit 76 wird Wärme freigesetzt, welche einerseits zu einer Erwärmung der Oxidationskatalysatoreinheit 76 beiträgt und somit dafür sorgt, dass diese schnell auf eine für die katalytische Reaktion erforderliche Betriebstemperatur gebracht wird bzw. effizient bei dieser Temperatur gehalten wird. Andererseits kann ein Teil dieser Wärme durch das die Oxidationskatalysatoreinheit 76 durchströmende Abgas in Richtung zu den nachfolgenden Systembereichen, insbesondere der Abgas/Reaktionsmittel-Mischstrecke 26 und den zweiten Abgasbehandlungseinheiten 40, 42, getragen werden. In der Abgas/Reaktionsmittel-Mischstrecke 26 kann dies zu einer verstärkten Verdampfung des in flüssiger Form eingespritzten Reaktionsmittels R beitragen. In den zweiten Abgasbehandlungseinheiten 40, 42 können jeweilige SCR-Katalysatoreinheiten 114, 116 derselben effizient erwärmt werden und schneller auf die für die SCR-Reaktion erforderliche Temperatur gebracht werden bzw. auf dieser Temperatur gehalten werden.

Mit dem erfindungsgemäßen Aufbau einer Abgasbehandlungsanordnung wird einerseits durch die Beimengung von Kohlenwasserstoff in den Abgasstrom und andererseits durch eine effiziente Durchmischung des Kohlenwasserstoffs mit dem in der Abgasbehandlungsanordnung strömenden Abgas dafür gesorgt, dass durch Oxidation des Kohlenwasserstoffs über eine große Fläche verteilt im Wesentlichen gleichförmig Wärme freigesetzt werden kann, welche zur Erwärmung verschiedener zur Durchführung katalytischer Reaktionen vorgesehener Systembereiche der Abgasbehandlungsanordnung 10 nutzbar ist. Durch die Integration der Kohlenwasserstoff-Einleitbaugruppe in den Strömungspfad in der vorangehend beschriebenen Art und Weise wird eine kompakte Ausgestaltung der Abgasbehandlungsanordnung erreicht bzw. beibehalten, bei welcher das Strömungsprinzip gewährleistet ist, das die Abgas-Hauptströmungsrichtung H₁ in dem auch die Kohlenwasserstoff-Einleitbaugruppe umfassenden Strömungspfad im Wesentlichen entgegengesetzt gerichtet ist zu einer Abgas-Hauptströmungsrichtung H₄ in der Abgas/Reaktionsmittel-Mischstrecke, während eine Abgas-Hauptströmungsrichtung H₅ in den zweiten Abgasbehandlungseinheiten zur Abgas-Hauptströmungsrichtung H₁ im Strömungspfad gleichgerichtet, zur Abgas-Hauptströmungsrichtung H₄ in der Abgas/Reaktionsmittel-Mischstrecke jedoch entgegengesetzt gerichtet ist. Damit kann gewährleistet werden, dass bei axial sehr kompakter Bauart aufgrund der Einleitung von Kohlenwasserstoff und aufgrund der effizienten Durchmischung des Kohlenwasserstoffs mit dem Abgas die gesetzlichen Grenzwerte für Schadstoffanteile im Abgas unter verschiedensten Betriebsumständen einer Brennkraftmaschine bzw. der Abgasanlage erreicht bzw. beibehalten werden können.

## Patentansprüche

1. Abgasbehandlungsanordnung für eine Abgasanlage einer Brennkraftmaschine, insbesondere Diesel-Brennkraftmaschine, umfassend:
- wenigstens eine erste Abgasbehandlungseinheit (68) und stromabwärts der wenigstens einen ersten Abgasbehandlungseinheit (68), eine Abgasbehandlungsbaugruppe (62), wobei die wenigstens eine erste Abgasbehandlungseinheit (68) und die Abgasbehandlungsbaugruppe (62) in Richtung einer Strömungspfad-Längsachse (L₂) eines die wenigstens eine erste Abgasbehandlungseinheit (68) und die Abgasbehandlungsbaugruppe (62) umfassenden Strömungspfads (14) axial aufeinander folgend angeordnet sind,
- einen Bypass-Strömungskanal (80), wobei der wenigstens eine Bypass-Strömungskanal (80) einen Strömungskanal-Eintrittsbereich (82) zur Aufnahme von Abgas (A) stromaufwärts der wenigstens einen ersten Abgasbehandlungseinheit (68) und einen Strömungskanal-Austrittsbereich (84) zum Abgeben von Abgas (A) in den Strömungspfad (14) stromabwärts der wenigstens einen ersten Abgasbehandlungseinheit (68) und stromaufwärts der Abgasbehandlungsbaugruppe (62) umfasst,
- wenigstens eine stromabwärts der Abgasbehandlungsbaugruppe (62) angeordnete zweite Abgasbehandlungseinheit (40, 42),
- eine stromabwärts der Abgasbehandlungsbaugruppe (62) und stromaufwärts der wenigstens einen zweiten Abgasbehandlungseinheit (40, 42) vorgesehene Abgas/Reaktionsmittel-Mischstrecke (26) mit einem im Wesentlichen in Richtung einer Mischstrecken-Längsachse (L₃) langgestreckten Mischkanal (30) und einer Reaktionsmittel-Abgabeeinheit (34) zum Abgeben von Reaktionsmittel (R) in den Mischkanal (30), wobei die Mischstrecken-Längsachse (L₃) im Wesentlichen parallel zur Strömungspfad-Längsachse (L₂) ist,
**dadurch gekennzeichnet,**
- **dass** eine Kohlenwasserstoff-Einleitbaugruppe (78) zum Einleiten von Kohlenwasserstoff (K) in die Abgasbehandlungsanordnung (10) durchströmendes Abgas (A) vorgesehen ist, wobei die Kohlenwasserstoff-Einleitbaugruppe (78) den wenigstens einen Bypass-Strömungskanal (80) sowie eine Kohlenwasserstoff-Abgabeeinheit (86) zum Abgeben von Kohlenwasserstoff (K) in den wenigstens einen Bypass-Strömungskanal (80) umfasst, wobei der wenigstens eine Bypass-Strömungskanal (80) ferner zum Abgeben von Kohlenwasserstoff (K) in den Strömungspfad (14) stromabwärts der wenigstens einen ersten Abgasbehandlungseinheit (68) und stromaufwärts der Abgasbehandlungsbaugruppe (62) ausgebildet ist, und
- **dass** der Strömungspfad (14) und die Abgas/Reaktionsmittel-Mischstrecke (26) einander in axialer Richtung im Wesentlichen vollständig überlappen, so dass ein Eintrittsbereich (58) der Abgas/Reaktionsmittel-Mischstrecke (26) in Richtung der Mischstrecken-Längsachse (L₃) im Wesentlichen im gleichen axialen Bereich positioniert ist, wie ein Austrittsbereich (60) der Abgasbehandlungsbaugruppe (62), und ein Austrittsbereich (64) der Abgas/Reaktionsmittel-Mischstrecke (26) in Richtung der Mischstrecken-Längsachse (L₃) im Wesentlichen im gleichen axialen Bereich positioniert ist, wie ein Eintrittsbereich (66) der wenigstens einen ersten Abgasbehandlungseinheit (68).

2. Abgasbehandlungsanordnung nach Anspruch 1, **dadurch gekennzeichnet, dass** ein stromaufwärtiger Endbereich (18) des Strömungspfads (14) an ein Einleitgehäuse (20) anschließt, und dass der Strömungskanal-Eintrittsbereich (82) des wenigstens einen Bypass-Strömungskanals (80) an das Einleitgehäuse (20) anschließt zur Aufnahme von Abgas (A) aus dem Einleitgehäuse (20) oder/und an einen zwischen dem Einleitgehäuse (20) und der wenigstens einen ersten Abgasbehandlungseinheit (68) liegenden Abschnitt des Strömungspfads (14) anschließt zur Aufnahme von Abgas (A) aus dem Strömungspfad (14).

3. Abgasbehandlungsanordnung nach Anspruch 1 oder 2, **dadurch gekennzeichnet, dass** in dem wenigstens einen Bypass-Strömungskanal (80) wenigstens eine Drallstrom-Erzeugungseinheit (88, 90) angeordnet ist, vorzugweise wobei wenigstens eine Drallstrom-Erzeugungseinheit (88) stromaufwärts der Kohlenwasserstoff-Abgabeeinheit (86) angeordnet ist oder/und wenigstens eine Drallstrom-Erzeugungseinheit (90) stromabwärts der Kohlenwasserstoff-Abgabeeinheit (86) angeordnet ist.

4. Abgasbehandlungsanordnung nach Anspruch 3, **dadurch gekennzeichnet, dass** dem wenigstens einen Bypass-Strömungskanal (80) eine Abgasstrom-Reguliereinheit (92) zugeordnet ist,
vorzugsweise wobei die Abgasstrom-Reguliereinheit (92) eine Stellklappe (94) umfasst.

5. Abgasbehandlungsanordnung nach einem der Ansprüche 1-4, **dadurch gekennzeichnet, dass** der wenigstens eine Bypass-Strömungskanal (80) einen in Richtung einer zur Strömungspfad-Längsachse (L₂) im Wesentlichen parallelen Strömungskanal-Längsachse (L₆) verlaufenden Strömungskanalabschnitt (96) umfasst, und dass die Kohlenwasserstoff-Abgabeeinheit (86) zur Abgabe von Kohlenwasserstoff (K) in den Strömungskanalabschnitt (96) ausgebildet ist.

6. Abgasbehandlungsanordnung nach einem der Ansprüche 1-5, **dadurch gekennzeichnet, dass** eine Abgas-Hauptströmungsrichtung (H₄) im Mischkanal (30) im Wesentlichen entgegengesetzt gerichtet ist zu einer Abgas-Hauptströmungsrichtung (H₁) im Strömungspfad (14).

7. Abgasbehandlungsanordnung nach einem der Ansprüche 1-6, **dadurch gekennzeichnet, dass** die wenigstens eine zweite Abgasbehandlungseinheit (40, 42) in Richtung einer zur Strömungspfad-Längsachse (L₂) im Wesentlichen parallelen Abgasbehandlungseinheit-Längsachse (L₄, Ls) langgestreckt ist und im Wesentlichen in Richtung der Abgasbehandlungseinheit-Längsachse (L₄, Ls) durchströmbar ist, und dass die wenigstens eine zweite Abgasbehandlungseinheit (40, 42) und die Abgas/Reaktionsmittel-Mischstrecke (26) einander in axialer Richtung im Wesentlichen vollständig überlappen, so dass der Eintrittsbereich (58) der Abgas/Reaktionsmittel-Mischstrecke (26) in Richtung der Mischstrecken-Längsachse (L₃) im Wesentlichen im gleichen axialen Bereich positioniert ist, wie ein Austrittsbereich (52, 54) der wenigstens einen zweiten Abgasbehandlungseinheit (40, 42), und der Austrittsbereich (64) der Abgas/Reaktionsmittel-Mischstrecke (26) in Richtung der Mischstrecken-Längsachse (L) im Wesentlichen im gleichen axialen Bereich positioniert ist, wie ein Eintrittsbereich (48, 50) der wenigstens einen zweiten Abgasbehandlungseinheit (40, 42),
vorzugsweise wobei der Eintrittsbereich (58) der Abgas/Reaktionsmittel-Mischstrecke (26) über ein erstes Strömungsumlenkgehäuse (24) mit dem Austrittsbereich (60) der Abgasbehandlungsbaugruppe (62) verbunden ist und der Austrittsbereich (64) der Abgas/Reaktionsmittel-Mischstrecke (26) über ein zweites Strömungsumlenkgehäuse (38) mit dem Eintrittsbereich (48, 50) der wenigstens einen zweiten Abgasbehandlungseinheit (40, 42) verbunden ist.

8. Abgasbehandlungsanordnung nach Anspruch 7, **dadurch gekennzeichnet, dass** wenigstens zwei zueinander parallel durchströmbare zweite Abgasbehandlungseinheiten (40, 42) quer zur Abgasbehandlungseinheit-Längsachse (L₄, Ls) nebeneinander und einander in Richtung der Abgasbehandlungseinheit-Längsachse (L₄, L₅) im Wesentlichen vollständig überlappend vorgesehen sind.

9. Abgasbehandlungsanordnung nach einem der Ansprüche 1-8, **dadurch gekennzeichnet, dass** wenigstens eine Abgasbehandlungseinheit (68, 40, 42) wenigstens eine SCR-Katalysatoreinheit (70, 114, 116) oder/und wenigstens eine Ammoniaksperrkatalysatoreinheit (72) umfasst, oder/und dass die Abgasbehandlungsbaugruppe (62) eine Oxidationskatalysatoreinheit (74) oder/und eine Partikelfiltereinheit (76) umfasst.

10. Abgasbehandlungsanordnung nach einem der Ansprüche 1-9, **dadurch gekennzeichnet, dass** der Strömungskanal-Eintrittsbereich (82) im gleichen axialen Bereich positioniert ist, wie ein Eintrittsbereich (66) der wenigstens einen ersten Abgasbehandlungseinheit (68), und der Strömungskanal-Austrittsbereich (84) axial zwischen der wenigstens einen ersten Abgasbehandlungseinheit (68) und der Abgasbehandlungsbaugruppe (62) liegt.

11. Abgasbehandlungsanordnung nach einem der Ansprüche 1-10, **dadurch gekennzeichnet, dass** an einem Austrittsbereich (102) der wenigstens einen ersten Abgasbehandlungseinheit (68) eine Drallstrom-Erzeugungseinheit (104), vorzugsweise mit einer Mehrzahl von im Wesentlichen radial bezüglich der Strömungspfad-Längsachse (L₂) sich erstreckenden Strömungsablenkelementen (106), angeordnet ist, oder/und dass an einem Eintrittsbereich (108) der Abgasbehandlungsbaugruppe (62) ein Strömungsverteilungselement (110) mit einer Vielzahl von, vorzugsweise im Wesentlichen gleich dimensionierten oder/und am Strömungsverteilungselement (110) im Wesentlichen gleichmäßig verteilten, Strömungsdurchtrittsöffnungen (112) angeordnet ist.

12. Abgasanlage für eine Brennkraftmaschine, insbesondere Diesel-Brennkraftmaschine, umfassend wenigstens eine Abgasbehandlungsanordnung (10) nach einem der Ansprüche 1-11.

## Claims

1. An exhaust-gas treatment arrangement for an exhaust gas system of an internal combustion engine, in particular diesel internal combustion engine, comprising:
- at least one first exhaust-gas treatment unit (68) and, downstream of the at least one first exhaust-gas treatment unit (68), an exhaust-gas treatment assembly (62), wherein the at least one first exhaust-gas treatment unit (68) and the exhaust-gas treatment assembly (62) are arranged axially one after the other in the direction of a flow-path longitudinal axis (L₂) of a flow path (14) comprising the at least one first exhaust-gas treatment unit (68) and the exhaust-gas treatment assembly (62),
- at least one bypass flow channel (80), wherein the at least one bypass flow channel (80) comprises a flow-channel inlet region (82) for receiving exhaust gas (A) upstream of the at least one first exhaust-gas treatment unit (68) and a flow-channel outlet region (84) for discharging exhaust gas (A) into the flow path (14) downstream of the at least one first exhaust-gas treatment unit (68) and upstream of the exhaust-gas treatment assembly (62),
- at least one second exhaust-gas treatment unit (40, 42) arranged downstream of the exhaust-gas treatment assembly (62),
- an exhaust-gas/reactant mixing section (26) provided downstream of the exhaust-gas treatment assembly (62) and upstream of the at least one second exhaust-gas treatment unit (40, 42), having a mixing channel (30), which is elongate substantially in the direction of a mixing-section longitudinal axis (L₃), and a reactant discharging unit (34) for discharging reactant (R) into the mixing channel (30), wherein the mixing-section longitudinal axis (L₃) is substantially parallel to the flow-path longitudinal axis (L₂),
**characterized in that**
- a hydrocarbon introduction assembly (78) is provided for introducing hydrocarbon (K) into exhaust gas (A) flowing through the exhaust-gas treatment arrangement (10), wherein the hydrocarbon introduction assembly (78) comprises the at least one bypass flow channel (80) as well as a hydrocarbon discharging unit (86) for discharging hydrocarbon (K) into the least one bypass flow channel (80), wherein the at least one bypass flow channel (80) is furthermore configured for discharging hydrocarbon (K) into the flow path (14) downstream of the at least one first exhaust-gas treatment unit (68) and upstream of the exhaust-gas treatment assembly (62),
and
- **in that** the flow path (14) and the exhaust-gas/reactant mixing section (26) overlap one another substantially completely in the axial direction, so that an inlet region (58) of the exhaust-gas/reactant mixing section (26) is positioned substantially in the same axial region in the direction of the mixing-section longitudinal axis (L₃) as an outlet region (60) of the exhaust-gas treatment assembly (62), and an outlet region (64) of the exhaust-gas/reactant mixing section (26) is positioned substantially in the same axial region in the direction of the mixing-section longitudinal axis (L₃) as an inlet region (66) of the at least one first exhaust-gas treatment unit (68).

2. The exhaust-gas treatment arrangement as claimed in claim 1, **characterized in that** an upstream end region (18) of the flow path (14) adjoins an introduction housing (20), and **in that** the flow-channel inlet region (82) of the at least one bypass flow channel (80) adjoins the introduction housing (20) for the purpose of receiving exhaust gas (A) from the introduction housing (20) or/and adjoins a portion of the flow path (14) that lies between the introduction housing (20) and the at least one first exhaust-gas treatment unit (68) for the purpose of receiving exhaust gas (A) from the flow path (14).

3. The exhaust-gas treatment arrangement as claimed in claim 1 or 2, **characterized in that** at least one swirling-flow generating unit (88, 90) is arranged in the at least one bypass flow channel (80), preferably wherein at least one swirling-flow generating unit (88) is arranged upstream of the hydrocarbon discharging unit (86), or/and wherein at least one swirling-flow generating unit (90) is arranged downstream of the hydrocarbon discharging unit (86).

4. The exhaust-gas treatment arrangement as claimed in claim 3, **characterized in that** an exhaust-gas-flow regulating unit (92) is assigned to the at least one bypass flow channel (80),
preferably wherein the exhaust-gas-flow regulating unit (92) comprises a butterfly valve (94).

5. The exhaust-gas treatment arrangement as claimed in one of claims 1-4, **characterized in that** the at least one bypass flow channel (80) comprises a flow channel portion (96) extending in the direction of a flow-channel longitudinal axis (L₆) that is substantially parallel to the flow-path longitudinal axis (L₂), and **in that** the hydrocarbon discharging unit (86) is designed to discharge hydrocarbon (K) into the flow channel portion (96).

6. The exhaust-gas treatment arrangement as claimed in one of claims 1-5, **characterized in that** an exhaust-gas main flow direction (H₄) in the mixing channel (30) is aligned substantially in the opposite direction to an exhaust-gas main flow direction (H₁) in the flow path (14).

7. The exhaust-gas treatment arrangement as claimed in one of claims 1-6, **characterized in that** the at least one second exhaust-gas treatment unit (40, 42) is elongate in the direction of an exhaust-gas-treatment-unit longitudinal axis (L₄, L₅) substantially parallel to the flow-path longitudinal axis (L₂) and can be flowed through substantially in the direction of the exhaust-gas-treatment-unit longitudinal axis (L₄, L₅), and **in that** the at least one second exhaust-gas treatment unit (40, 42) and the exhaust-gas/reactant mixing section (26) overlap one another substantially completely in the axial direction, so that the inlet region (58) of the exhaust-gas/reactant mixing section (26) is positioned substantially in the same axial region in the direction of the mixing-section longitudinal axis (L₃) as an outlet region (52, 54) of the at least one second exhaust-gas treatment unit (40, 42), and the outlet region (64) of the exhaust-gas/reactant mixing section (26) is positioned substantially in the same axial region in the direction of the mixing-section longitudinal axis (L) as an inlet region (48, 50) of the at least one second exhaust-gas treatment unit (40, 42), preferably wherein the inlet region (58) of the exhaust-gas/reactant mixing section (26) is connected to the outlet region (60) of the exhaust-gas treatment assembly (62) via a first flow deflection housing (24) and the outlet region (64) of the exhaust-gas/reactant mixing section (26) is connected to the inlet region (48, 50) of the at least one second exhaust-gas treatment unit (40, 42) via a second flow deflection housing (38).

8. The exhaust-gas treatment arrangement as claimed in claim 7, **characterized in that** at least two second exhaust-gas treatment units (40, 42), which can be flowed through in parallel, are provided next to one another transversely in relation to the exhaust-gas-treatment-unit longitudinal axis (L₄, L₅) and so as to substantially completely overlap one another in the direction of the exhaust-gas-treatment-unit longitudinal axis (L₄, L₅).

9. The exhaust-gas treatment arrangement as claimed in one of claims 1-8, **characterized in that** at least one exhaust-gas treatment unit (68, 40, 42) comprises at least one SCR catalytic converter unit (70, 114, 116) or/and at least one ammonia slip catalytic converter unit (72), or/and wherein the exhaust-gas treatment assembly (62) comprises an oxidation catalytic converter unit (74) or/and a particle filter unit (76).

10. The exhaust-gas treatment arrangement as claimed in one of claims 1-9, **characterized in that** the flow-channel inlet region (82) is positioned in the same axial region as an inlet region (66) of the at least one first exhaust-gas treatment unit (68), and the flow-channel outlet region (84) lies axially between the at least one first exhaust-gas treatment unit (68) and the exhaust-gas treatment assembly (62).

11. The exhaust-gas treatment arrangement as claimed in one of claims 1-10, **characterized in that** a swirling-flow generating unit (104), preferably having a plurality of flow deflection elements (106) extending substantially radially in relation to the flow-path longitudinal axis (L₂), is arranged at an outlet region (102) of the at least one first exhaust-gas treatment unit (68), or/and so that a flow distribution element (110) having a multiplicity of flow through-openings (112), preferably with substantially the same dimensions or/and distributed substantially evenly on the flow distribution element (110), is arranged at an inlet region (108) of the exhaust-gas treatment assembly (62).

12. An exhaust gas system for an internal combustion engine, in particular diesel internal combustion engine, comprising at least one exhaust-gas treatment arrangement (10) as claimed in one of claims 1-11.

## Revendications

1. Un dispositif de traitement des gaz d'échappement pour un système d'échappement d'un moteur à combustion interne, en particulier d'un moteur à combustion interne diesel, comprenant :
- au moins une première unité de traitement des gaz d'échappement (68) et, en aval de ladite au moins une première unité de traitement des gaz d'échappement (68), un ensemble de traitement des gaz d'échappement (62), dans lequel ladite au moins une première unité de traitement des gaz d'échappement (68) et le module de traitement des gaz d'échappement (62) sont disposés axialement l'un après l'autre dans la direction d'un axe longitudinal du trajet d'écoulement (L₂) d'un trajet d'écoulement (14) comprenant ladite au moins une première unité de traitement des gaz d'échappement (68) et le module de traitement des gaz d'échappement (62),
- au moins un canal d'écoulement de dérivation (80), dans lequel ledit au moins un canal d'écoulement de dérivation (80) comprend une zone d'entrée de canal d'écoulement (82) pour recevoir les gaz d'échappement (A) en amont de ladite au moins une première unité de traitement des gaz d'échappement (68) et une zone de sortie de canal d'écoulement (84) pour évacuer les gaz d'échappement (A) dans le trajet d'écoulement (14) en aval de ladite au moins une première unité de traitement des gaz d'échappement (68) et en amont du module de traitement des gaz d'échappement (62),
- au moins une deuxième unité de traitement des gaz d'échappement (40, 42) disposée en aval du module de traitement des gaz d'échappement (62),
- une section de mélange des gaz d'échappement/du réactif (26) prévue en aval du module de traitement des gaz d'échappement (62) et en amont de ladite au moins une deuxième unité de traitement des gaz d'échappement (40, 42) avec un canal de mélange (30), qui est allongé sensiblement dans la direction d'un axe longitudinal de la section de mélange (L₃), et une unité d'évacuation de réactif (34) pour évacuer le réactif (R) dans le canal de mélange (30), dans lequel l'axe longitudinal de la section de mélange (L₃) est sensiblement parallèle à l'axe longitudinal du trajet d'écoulement (L₂),
**caractérisé en ce que**
- un module d'introduction d'hydrocarbure (78) est prévu pour introduire de l'hydrocarbure (K) dans les gaz d'échappement (A) s'écoulant à travers le dispositif de traitement des gaz d'échappement (10), dans lequel le module d'introduction d'hydrocarbure (78) comprend ledit au moins un canal d'écoulement de dérivation (80) ainsi qu'une unité d'évacuation d'hydrocarbure (86) pour évacuer l'hydrocarbure (K) dans ledit au moins un canal d'écoulement de dérivation (80), dans lequel ledit au moins un canal d'écoulement de dérivation (80) est en outre configuré pour évacuer les hydrocarbures (K) dans le trajet d'écoulement (14) en aval de ladite au moins une première unité de traitement des gaz d'échappement (68) et en amont du module de traitement des gaz d'échappement (62),
et
- **en ce que** le trajet d'écoulement (14) et la section de mélange des gaz d'échappement/du réactif (26) se chevauchent sensiblement complètement dans la direction axiale, de sorte qu'une zone d'entrée (58) de la section de mélange des gaz d'échappement/du réactif (26) est positionnée sensiblement dans la même zone axiale dans la direction de l'axe longitudinal de la section de mélange (L₃) qu'une zone de sortie (60) du module de traitement des gaz d'échappement (62), et une zone de sortie (64) de la section de mélange des gaz d'échappement/du réactif (26) est positionnée sensiblement dans la même zone axiale dans la direction de l'axe longitudinal de la section de mélange (L₃) qu'une zone d'entrée (66) de ladite au moins une première unité de traitement des gaz d'échappement (68).

2. Le dispositif de traitement des gaz d'échappement selon la revendication 1, **caractérisé en ce qu'**une zone d'extrémité amont (18) du trajet d'écoulement (14) est adjacente à un boîtier d'introduction (20), et **en ce que** la zone d'entrée du canal d'écoulement (82) dudit au moins un canal d'écoulement de dérivation (80) est adjacente au boîtier d'introduction (20) afin de recevoir les gaz d'échappement (A) provenant du boîtier d'introduction (20) ou/et est adjacente à une section du trajet d'écoulement (14) qui se trouve entre le boîtier d'introduction (20) et ledit au moins une première unité de traitement des gaz d'échappement (68) afin de recevoir les gaz d'échappement (A) provenant du trajet d'écoulement (14).

3. Le dispositif de traitement des gaz d'échappement selon la revendication 1 ou 2, **caractérisé en ce qu'**au moins une unité génératrice de flux tourbillonnant (88, 90) est disposée dans ledit au moins un canal d'écoulement de dérivation (80), de préférence dans lequel au moins une unité génératrice de flux tourbillonnant (88) est disposée en amont de l'unité d'évacuation des hydrocarbures (86), ou/et dans lequel au moins une unité génératrice de flux tourbillonnant (90) est disposée en aval de l'unité d'évacuation d'hydrocarbures (86).

4. Le dispositif de traitement des gaz d'échappement selon la revendication 3, **caractérisé en ce qu'**une unité de régulation de flux de gaz d'échappement (92) est affectée audit au moins un canal d'écoulement de dérivation (80),
de préférence dans lequel l'unité de régulation de flux de gaz d'échappement (92) comprend une vanne papillon (94).

5. Le dispositif de traitement des gaz d'échappement selon l'une des revendications 1 à 4, **caractérisé en ce que** ledit au moins un canal d'écoulement de dérivation (80) comprend une section de canal d'écoulement (96) s'étendant dans la direction d'un axe longitudinal du canal d'écoulement (L₆) qui est sensiblement parallèle à l'axe longitudinal du trajet d'écoulement (L₂), et **en ce que** l'unité d'évacuation d'hydrocarbures (86) est conçue pour évacuer les hydrocarbures (K) dans la section de canal d'écoulement (96).

6. Le dispositif de traitement des gaz d'échappement selon l'une des revendications 1 à 5, **caractérisé en ce qu'**une direction d'écoulement principale des gaz d'échappement (H₄) dans le canal de mélange (30) est alignée sensiblement dans la direction opposée à une direction d'écoulement principale des gaz d'échappement (H₁) dans le trajet d'écoulement (14).

7. Le dispositif de traitement des gaz d'échappement selon l'une des revendications 1 à 6, **caractérisé en ce que** ladite au moins une deuxième unité de traitement des gaz d'échappement (40, 42) est allongée dans la direction d'un axe longitudinal de l'unité de traitement des gaz d'échappement (L₄, L₅) sensiblement parallèle à l'axe longitudinal du trajet d'écoulement (L₂) et peut être traversée sensiblement dans la direction de l'axe longitudinal de l'unité de traitement des gaz d'échappement (L₄, L₅), et **en ce que** ladite au moins une deuxième unité de traitement des gaz d'échappement (40, 42) et la section de mélange des gaz d'échappement/du réactif (26) se chevauchent sensiblement complètement dans la direction axiale, de sorte que la zone d'entrée (58) de la section de mélange des gaz d'échappement/du réactif (26) est positionnée sensiblement dans la même zone axiale dans la direction de l'axe longitudinal de la section de mélange (L₃) qu'une zone de sortie (52, 54) de ladite au moins une deuxième unité de traitement des gaz d'échappement (40, 42), et la zone de sortie (64) de la section de mélange des gaz d'échappement/du réactif (26) est positionnée sensiblement dans la même zone axiale dans la direction de l'axe longitudinal de la section de mélange (L) qu'une zone d'entrée (48, 50) de ladite au moins une deuxième unité de traitement des gaz d'échappement (40, 42), de préférence dans lequel la zone d'entrée (58) de la section de mélange des gaz d'échappement/du réactif (26) est reliée à la zone de sortie (60) du module de traitement des gaz d'échappement (62) par l'intermédiaire d'un premier boîtier de déviation d'écoulement (24) et la zone de sortie (64) de la section de mélange des gaz d'échappement/du réactif (26) est reliée à la zone d'entrée (48, 50) de ladite au moins une deuxième unité de traitement des gaz d'échappement (40, 42) par l'intermédiaire d'un deuxième boîtier de déviation d'écoulement (38).

8. Le dispositif de traitement des gaz d'échappement selon la revendication 7, **caractérisé en ce qu'**au moins deux deuxièmes unités de traitement des gaz d'échappement (40, 42), qui peuvent être traversées en parallèle, sont disposées l'une à côté de l'autre transversalement par rapport à l'axe longitudinal (L₄), (L₅) de l'unité de traitement des gaz d'échappement et de manière à se chevaucher sensiblement complètement dans la direction de l'axe longitudinal (L₄), (L₅) de l'unité de traitement des gaz d'échappement.

9. Le dispositif de traitement des gaz d'échappement selon l'une des revendications 1 à 8, **caractérisé en ce qu'**au moins une unité de traitement des gaz d'échappement (68, 40, 42) comprend au moins une unité de convertisseur catalytique SCR (70, 114, 116) et/ou au moins une unité de convertisseur catalytique à glissement d'ammoniac (72), ou/et dans lequel le module de traitement des gaz d'échappement (62) comprend une unité de convertisseur catalytique d'oxydation (74) ou/et une unité de filtre à particules (76).

10. Le dispositif de traitement des gaz d'échappement selon l'une des revendications 1 à 9, **caractérisé en ce que** la zone d'entrée (82) du canal d'écoulement est positionnée dans la même zone axiale qu'une zone d'entrée (66) de ladite au moins une première unité de traitement des gaz d'échappement (68), et la zone de sortie du canal d'écoulement (84) se trouve axialement entre ladite au moins une première unité de traitement des gaz d'échappement (68) et le module de traitement des gaz d'échappement (62).

11. Le dispositif de traitement des gaz d'échappement selon l'une des revendications 1 à 10, **caractérisé en ce qu'**une unité génératrice de flux tourbillonnant (104), comportant de préférence une pluralité d'éléments de déviation d'écoulement (106) s'étendant sensiblement radialement par rapport à l'axe longitudinal du trajet d'écoulement (L₂), est disposée au niveau d'une zone de sortie (102) de ladite au moins une première unité de traitement des gaz d'échappement (68), ou/et **en ce qu'**un élément de distribution d'écoulement (110) ayant une pluralité d'ouvertures de passage d'écoulement (112), de préférence avec sensiblement les mêmes dimensions ou/et réparties sensiblement uniformément sur l'élément de distribution d'écoulement (110), est agencé au niveau d'une zone d'entrée (108) du module de traitement des gaz d'échappement (62).

12. Un système de gaz d'échappement pour un moteur à combustion interne, en particulier un moteur à combustion interne diesel, comprenant au moins un dispositif de traitement des gaz d'échappement (10) selon l'une des revendications 1 à 11.
